Europäisches Patentamt

European Patent Office

Office européen des brevets

(19)

(11) Publication number: **0 397 071**
**A2**

(12) **EUROPEAN PATENT APPLICATION**

(21) Application number: **90108529.0**

(22) Date of filing: **07.05.90**

(51) Int. Cl.5: **G09B 9/34, G06F 15/72**

(30) Priority: **10.05.89 US 350062**

(43) Date of publication of application:
**14.11.90 Bulletin 90/46**

(84) Designated Contracting States:
**DE FR GB IT**

(71) Applicant: **HONEYWELL INC.**
**Honeywell Plaza**
**Minneapolis MN 55408(US)**

(72) Inventor: **Egli, Werner H.**
**10110 - 103rd Place North**
**Maple Grove, Minnesota 55369(US)**
Inventor: **Rylander, Karen S.**
**3522 Grand Avenue South No. 106**
**Minneapolis, Minnesota 55408(US)**
Inventor: **Fant, Karl M.**
**1916 S.E. Franklin Avenue**
**Minneapolis, Minnesota 55414(US)**

(74) Representative: **Herzbach, Dieter et al**
**Honeywell Europe S.A. Holding KG Patent &**
**License Dept. Kaiserleistrasse 55 Postfach**
**10 08 65**
**D-6050 Offenbach am Main(DE)**

(54) **Method for perspective position mapping.**

(57) The invention relates generally to a computer controlled digital imaging processing system which operates to compose and construct a sequential stream of scenes for a 2-dimensional display from a library of images of objects such as trees. The invention relates in particular to a method for the real-time true perspective of a pixelized plane object onto a pixelized view screen. The processing speed is sufficient to permit a real-time, or near real-time, analysis of the images by a human operator or a hardware/ software equivalent thereof. The images of objects stored in the library are in the form of rectangular frames. A vehicle such as a helicopter simulator has a field of view which represents what is seen through the "windshield" thereof which in the simulator is the screen of a computer monitor. The four corners of a stored image having a rectangular frame are located by calculations in the face of the monitor screen. The mapping of rows and columns of a stored image is done in two passes or stages. Perspective mapping from the rectangular stored frame to the monitor screen makes conversions on the basis of a different parts of the object being different distances from the "windshield" or face of the monitor screen and thus the more realistic effects of a perspective view are achieved. The two-pass perspective mapping process provides for mapping images of objects which appear in the field of view from the corresponding images in the library to the face of the monitor screen. The method facilitates substantially true perspective mapping as distinguished from approximate perspective mapping.

RO

$\vec{JY}$

—10

OBJECT
PLANE
PIXEL GRID

Ro

18

$\vec{KZ}$

$R(Y,Z) = RO + \vec{J}*Y + \vec{K}*Z$

*Fig. 4*

# METHOD FOR PERSPECTIVE POSITION MAPPING

The invention relates to a method for perspective position mapping according to the preamble of claim 1 as used in a computer controlled imaging system which is operable to compose and construct a sequential stream of scenes for a display from a library of images with sufficient processing speed to permit real-time or near real-time analysis of the images by a human operator.

An example of one application of such a system relates to the field of vehicle simulation such as aircraft flight simulation. In such a system a visual subsystem within the aircraft flight simulation system receives flight data from a flight simulation computer and terrain data from a data base. A data processing system within the visual simulation system organizes the flight data and terrain data to produce a simulated visual display as it would appear to an observer in the cockpit of the aircraft.

The visual system of a vehicle simulator which may be, for example, a helicopter simulator, involves a "window view" of the simulated surroundings and controls for guiding the "vehicle" in any desired direction relative to such surroundings. The term "window view" of the system referred to herein is a display, normally in video form, of a simulated environment which corresponds to a terrain covering a large area which may be on the order of 25 to 100 square kilometers, for example.

The operation of the controls of the vehicle guides the vehicle in, around and through the terrain and it is the system response to the vehicle controls which determines what is seen in the window, that is, the video display. What is seen in the "window" is referred to as the "field of view" or FOV.

In the invention herein a scene is constructed by placing individual objects, detailed with high fidelity, on a specified surface or background which may be computer generated imagery (CGI) or computer sythesized imagery (CSI) generated. A scene may be constructed much in the manner of a CGI scene with the surface elevations and object locations laid out on a uniform grid. The individual objects used in the scene are tailored for perspective, location and transformation including size. Position, rotation, warp and intensity are performed on each image as required. The surface may be CGI texture or a series of CSI surface inserts. The scene is normally constructed by beginning with the objects most remote from the observation or scene recognition means and placing objects until the nearest objects have been placed.

The above description of the system to which the invention relates is also a part of US-A-48 35 532.

In US-A 48 35 532, Figs. 7 to 12 show a number of relatively small objects which occupy less than a predetermined fraction of the total screen. In one embodiment of that patent objects occupying less than 1/16 of the scene's area were represented in 2D. This is because, in the majority of applications, relatively small natural objects such as trees, bushes and rocks may be represented from one side, i.e., as 2D objects, with little loss of realism. Relatively small 2D objects may be processed by less extensive processing hardware/software than 3D objects and surfaces. During the flight through a scene, the 2D objects may be handed off to a 3D processor when it occupies more than a predetermined amount of the area of the scene.

The data base of the system shown in US-A-48 35 532 includes an object library, in the form of data buffer frames on optical disks, of imagery such as trees, shrubs and billboards. The hardware of the system positions the objects, via the buffer frames, at desired places in the terrain as required.

Figs. 15 and 16 of US-A-48 35 532 illustrate the process of providing data buffer frames on an optical disk which represent high fidelity objects and surfaces.

An FOV processor determines the presence of objects, surfaces, and special effects in the scene under construction. The output of a transformation matrix converts real-world coordinates to screen coordinates. The FOV processor maintains a list of objects in the field of view and their object, surface or special-effect channel assignment. The function of the FOV processor is to determine what can be seen by the observer.

It is the object of the present invention to devise an improved perspective mapping method as may be taken from the characterizing features of claim 1. Further advantageous embodiments of said method may be taken from the dependent claims.

Other objects of the invention will become apparent from the following specification, drawings and appended claims.

In the drawings:

Fig. 1 is an aerial view of terrain which, along with objects thereon, could be represented in a data base;

Fig. 2 shows two-pass mapping of an object input pixel image into an output display screen via an intermediate frame;

Fig. 3 illustrates the geometry of true perspective projection;

Fig. 4 illustrates the principle of repetitive pixel mapping;

Fig. 5 shows an image pixel grid superposed on a view plane pixel grid;

Fig. 6 shows Y-axis edges of image pixels rotated into alignment with horizontal axis of view plane pixel grid;

Fig. 7 shows image pixels vertically redistributed into view plane pixel grid with first pass done;

Fig. 8 shows Z-axis edges of intermediate pixels rotated into alignment with view plane vertical axis;

Fig. 9 shows intermediate pixels horizontally distributed into view plane pixel grid with second pass done and transformation completed;

Fig. 10 is a graph of the actual relationship between object pixels images on the view plane and view plane pixels;

Fig. 11 is a flowchart of the perspective mapping process in accordance with the invention; and

Figs. 12 and 13 are graphs similar to that of Fig. 10 which apply specifically to the two-pass mapping illustrated in Fig. 2.

It is desired to emphasize that the invention herein relates to a general method for mapping pixels from a first image frame in one plane to a second image frame in the same or in another plane. It is only by way of example that this mapping method is disclosed in connection with the particular imaging system described herein.

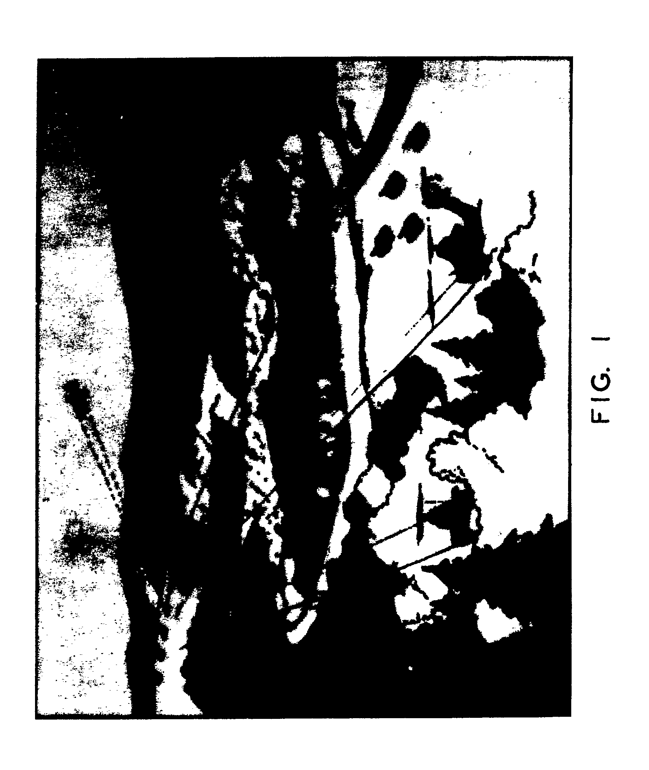

An imaging system of the type to which the present invention is applicable could be designed to have a representation of a terrain as shown in Fig. 1 which could have trees, buildings, roads and other objects placed thereon. The designed terrain might represent an area on the order of 1300 square kilometers, for example.

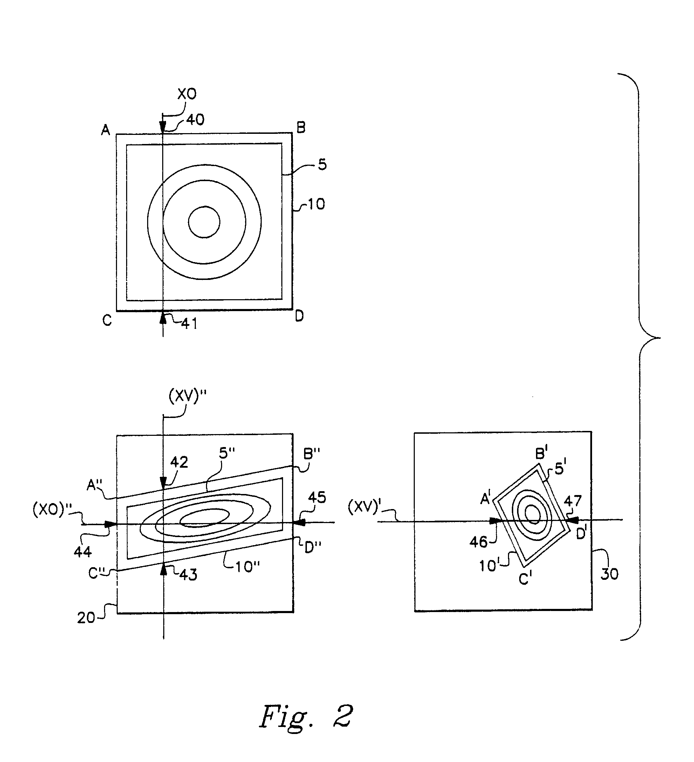

The manual controls of a helicopter simulator are operable to "move" a helicopter in and around the terrain at the will of the operator. A computer FOV program operates to determine in real time the operator's view of the terrain on a video "windshield" through which a patch or portion of the terrain would be visible. If this terrain patch happened to be the site of a billboard 5 the FOV program would determine the exact location of the billboard in the terrain. In this particular imaging system an image of the billboard would be stored in memory in a full size 512 by 512 pixel image or object frame 10 as shown in Fig. 2. Memory would also contain information as to the size of frame 10 relative to the world coordinates of the terrain.

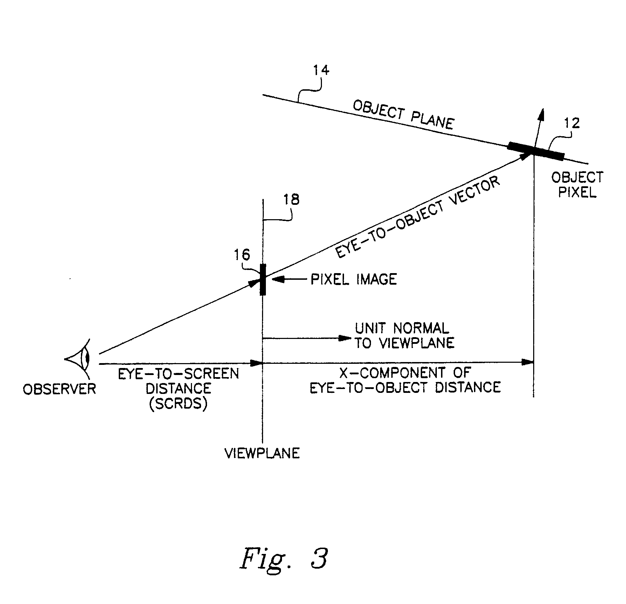

Fig. 3 illustrates the geometry of true perspective projection which shows the relationship between a pixel 12 in an object plane 14 and its pixel image 16 in a view plane 18. With reference to Fig. 2, the image frame 10 would be in the object plane 14 of Fig. 3.

The geometry of Fig. 3 may be used to map a single pixel from the object plane to the view plane. But the usual condition wherein the object plane forms one or more acute angles relative to the view plane prevents, by reason of the mechanics of scanning, rows and columns of pixels of the image frame 10 from being mapped directly to the view plane. This mapping problem was solved, however, via a two-pass mapping process disclosed in US-A-48 35 532.

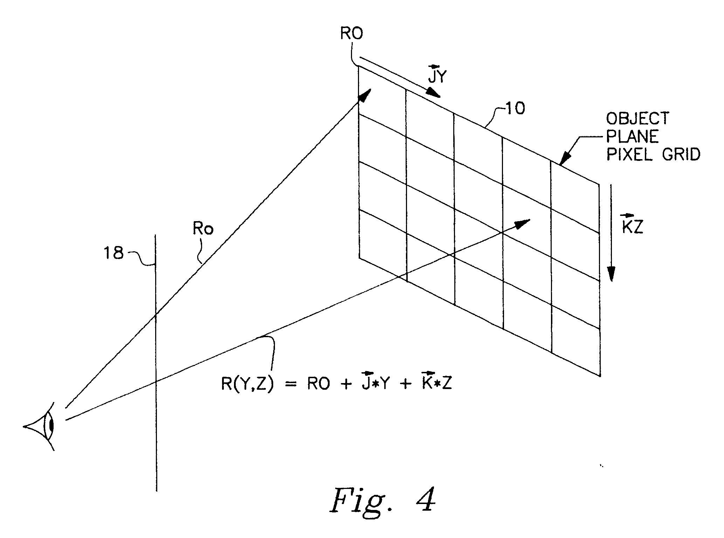

The two-pass mapping process can be viewed as splitting the mapping into two 1-dimensional half-mappings. In each of these, rows or columns of object pixels are mapped into rows or columns of view plane pixels, in a simple repetitive procedure (Fig. 4) driven by a bilinear transform:

$$XV = (A^*XO + B)/(XO + C)$$

where: XO = distance along object pixel row (or column) from any arbitrary reference origin of convenience
XV = distance along view plane pixel row (or column) from any convenient origin, of the image of XO,
and where A, B, C and D are constants of the transformation.

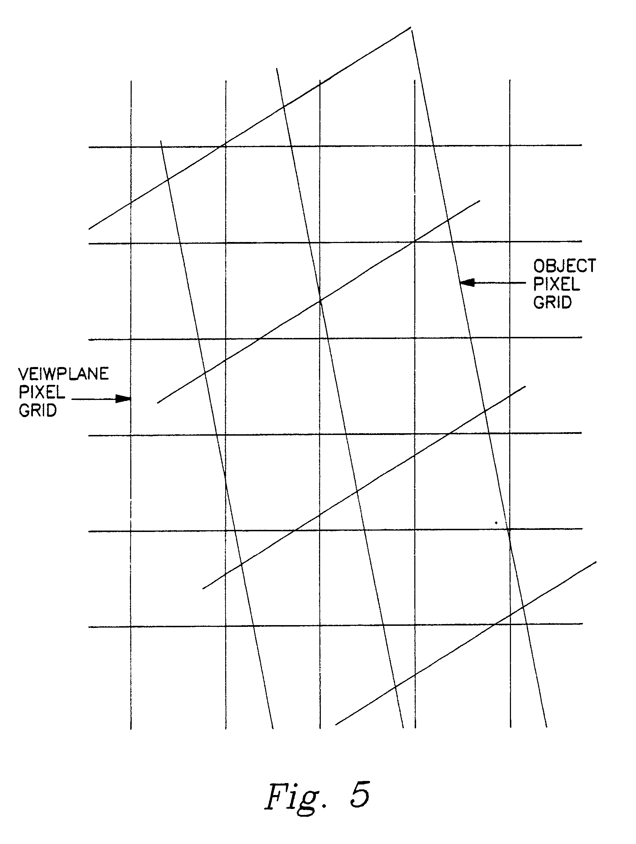

Assuming that a literal exact infinitesimal mathematical true perspective transform had been done, an exact image of the pixelized object would have been cast on the view plane (Fig. 5). The image would be seen from the designated eyepoint to look exactly the same as the pixelized object, viewed from that same eyepoint. But, the image pixel grid doesn't correspond with the view plane pixel grid, so the image has to be repainted in view plane pixels. The image pixels have to be regridded to conform to the view plane grid. In so doing, their illumination values (which, by the rules of optics, are equal to those of their parent object pixels) have to be redistributed into the view plane pixels.

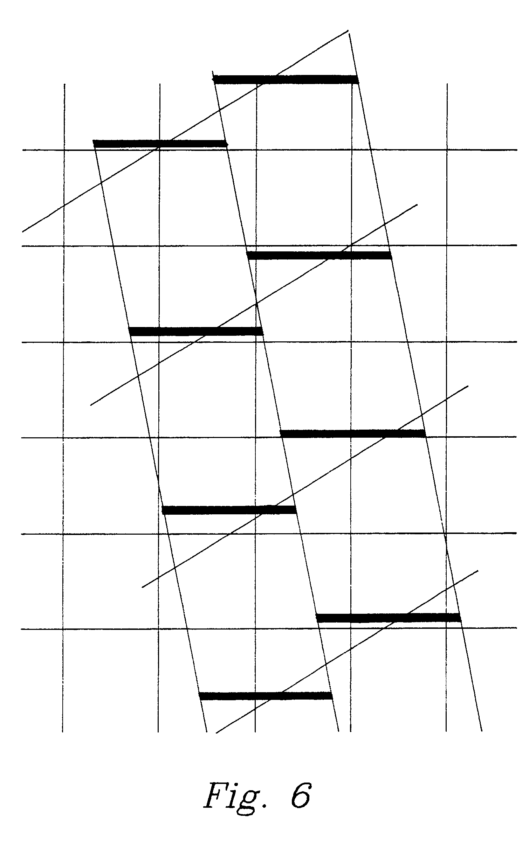

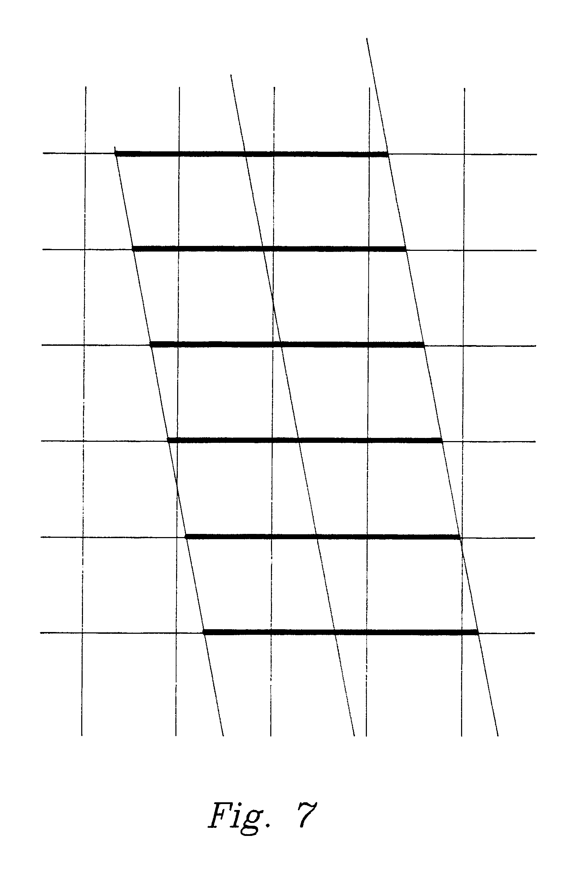

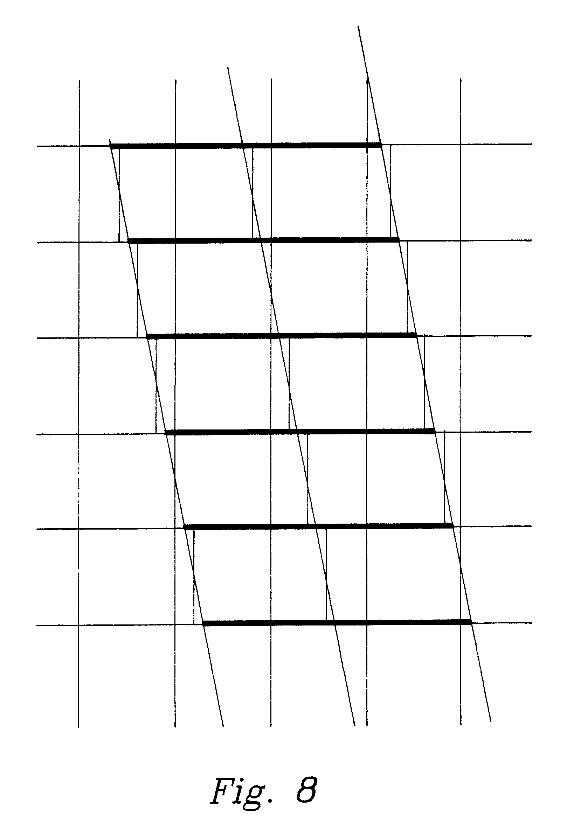

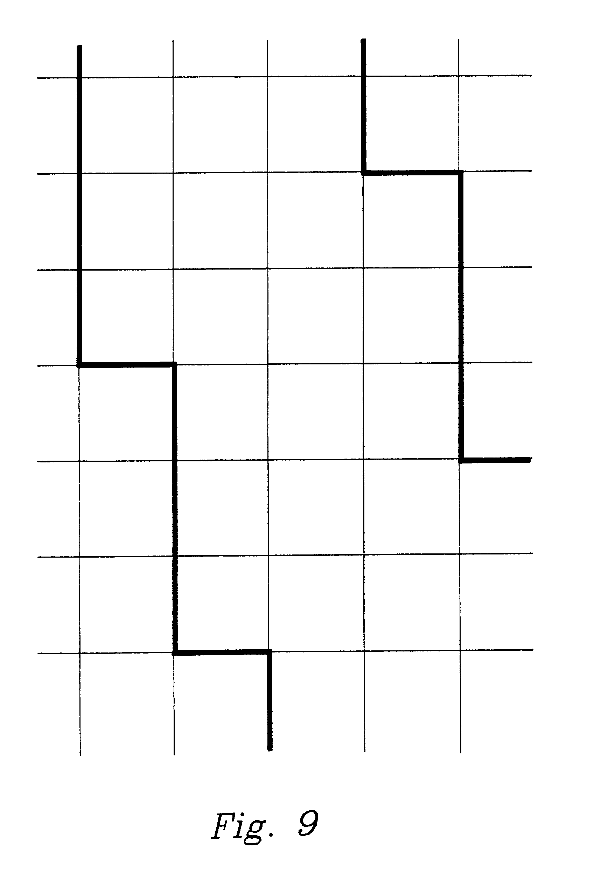

In the two-pass mapping procedure of US-A-48 35 532 the image pixels, and their intensity values, are reorganized in the first pass along the vertical direction of the image pixel grid to bring them into register with the vertical structure of the view plan grid. Then, in the second pass, the vertically transformed pixels, and their transformed intensities, are reorganized along the horizontal direction of the view plane grid. These procedures are shown metaphorically in Figs. 6 through 9.

The rationale for the two pass procedure is that pixel intensity values are handled either a column at a time, or a row at a time. It is not difficult to design hardware which can rapidly address and process a contiguous array but, if the procedure were done in one step, computing time would get eaten up by computing two-subscript addresses. There isn't time to do this, since up to a million pixels must be transformed in as little as a 60th of a second.

The transformation process occurring during each pass may be described as a pixel-matching process, along one direction of the image of the object plane grid, and the selected matching direction of the view plane grid. Conceptually, each object pixel is projected onto the view plane, and an attempt is made to fit it, along with its integrated intensity content, into a bracketing view plane pixel. If feasible, this is done, the available length of the view plane pixel is shortened by the length of the image pixel, and a new image pixel is fetched. If not feasible, then an output pixel is completed, the input pixel is shortened by the length of the output pixel, and a new output pixel is fetched. The above is done until either there are no more image pixels, or there are no more view plane pixels left in the current row.

This procedure is repeated for each row until all rows have been done. Then, the second pass repeats the remapping, in the other pair of matching directions, in a completely similar row by row procedure. The final result is the complete mapping of the pixelized object onto the pixelized view plane, to generate a pixelized true perspective view of the object, as seen from the eyepoint. The pixel-to-pixel mapping process is known from US-A- 48 35 532.

The mathematical basis for the above two-pass solution, which is of interest herein, may be explained with respect to Fig. 4 which shows the relationship between the view plane 18 and the image frame 10 which (from Fig. 3) is in the object plane 14.

The mathematical basis for the two-pass mapping procedure involves bilinear transformations. The first step is to derive the coefficients for conventional mapping, based on vector geometry. For mapping from a plane onto a plane, under true perspective rules, these will have the form:

$$Z' (A1 + A2*Y + A3*Z)/(C1 + C2*Y + C3*Z)$$
$$Y' = (B1 + B2*Y + B3*Z)/(C1 + C2*Y + C3*Z),$$

where Y and Z are coordinates of the frame 10 in the object plane, and $Y'$ and $Z'$ are the corresponding coordinates, in the view plane, of the image of the point defined by Y and Z. The $Z'$ part of the transformation is done completely, before starting the $Y'$ part. Specifically, it is done by transforming a column of pixels at a time, for which Y is constant and Z varies. This is repeated with the value of Y stepped up by one pixels-worth (in the Y direction of the object plane pixel grid) each time, until the whole object frame 10 has been scanned. Next, in a similar procedure, the $Y'$ part of the transform is done, but this time it is done with the value of $Z'$, not Z, held constant over each row, and stepped one pixels-worth for each new row (in the $Z'$ direction of the view plane pixel grid).

The next step is to manipulate the expressions to give the second pass transform expressed in terms of Y, $Y'$ and $Z'$. The resultant expression is:

$$Y' = (T1 + T2*Y)/(T3 + T4*Y),$$

where: $T1 = (A1*B3 - A3*B1) + (B1*C3 - B3*C1)*Z'$
$T2 = (A2*B3 - A3*B2) + (B2*C3 - B3*C2)*Z'$
$T3 = (A1*C3 - A3*C1)$
$T4 = (A2*C3 - A3*C2)$

Thus, the coefficients of the conventional transformation (the A's, B's and C's) are found, and then used to generate the two transforms as formulated above. Referring to Fig. 4, a point in the object plane may be denoted by its position vector, relative to the "eyepoint" of the true perspective transformation, by:

$$R(Y,Z) = RO + J*Y + K*Z,$$

where:

RO = Vector denoting position of the designated origin point of the object plane

J = Unit vector along the Y axis of the object plane

K = Unit vector along the Z axis of the object plane

Y = Distance of R from RO along Y axis

Z = Distance of R from RO along 2 axis

The vector position R(Y,Z) maps into some vector $R'$ colinear with R, but which terminates in the view plane. This is done by multiplying R by that scalar which makes the x-component of R (the component of R resolved along the "eyeline" axis normal to the view plane) equal to the distance (SCRDS) of the view plane from the eyepoint.

$$R' = SCRDS*R(Y,Z)/(i.R(Y,Z)),$$

where:

SCRDS = Distance (Fig. 3) from eyepoint to view plane

i = Unit vector along the "eyeline" axis

v1.v2 denotes "scalar product of vectors v1 and v2"

Then, $Z'$ is simply the component of $R'$ resolved along the z axis of the view plane, and $Y'$ is the

5

component of $P'$ resolved along the y axis:

$Z' = k.R' = SCRDS^*(k.R)/(i.R)$

$Y' = j.R' = SCRDS^*(j.r)/(i.R)$

Putting $R = RO + J^*Y + K^*Z$ in the above yields:

$Z' = SCRDS^*(k.RO + Y^*(k.J) + Z^*(k.K))/(i.RO + Y^*(i.J) + Z^*(i.K))$

$Y = SCRDS^*(j.RO + Y^*(j.J) + Z^*(j.K))/(i.RO + Y^*(i.J) + Z^*(i.K))$

For convenience, Y, Z, $Y'$ and $Z'$ are expressed in terms of pixels in the object and view planes:

$Y = M^*WYO$

$Z = N^*WZO$

$Y' - M'^*WYP$

$Z' = N'^*WZP$

where:

WYO = Y-length of the rectangular object plane pixels

WZO = Z-length of the rectangular object plane pixels

M = Number of pixels from origin along Y-direction

N = Number of pixels from origin along Z-direction

WYP = $Y'$-length of the rectangular view plane pixels

WZP = $Z'$-length of the rectangular view plane pixels

$M'$ = Number of pixels from origin along $Y'$-direction

$N'$ = Number of pixels from origin along $Z'$-direction

(Often, of course, WYO = WZO and/or WYP = WZP, that is, the pixels will be square.)

With this is obtained the pixel-to-pixel transformation expressions:

$N' = (A1 + A2^*M + A3^*N)/(C1 + C2^*M + C3^*N)$

$M' = (B1 + B2^*M + B3^*N)/(C1 + C2^*M + C3^*N)$

where:

A1 = S1$^*$(k.RO) (S1 = SCRDS WZP)

A2 = S1$^*$(k.J)$^*$WYO

A3 = S1$^*$(k.K)$^*$WZO

B1 = SS$^*$(j.RO) (S2 = SCRDS WYP)

B2 = S2$^*$(j.J)$^*$WYO

B3 = S2$^*$(j.K)$^*$WZO

C1 = (i.RO)

C2 = (i.J)$^*$WYO

C3 (i.K)$^*$WZO

The vector dot-product values are obtained as follows: i.RO, j.RO, and K.RO are respectively equal to X, Y, and Z, the coordinates which represent the position of the designated origin point of the object, in the eyepoint reference frame. The other dot-products are simply elements of the attitude matrix of the object, relative to the eyepoint frame, as shown below:

$$\text{AM} = \begin{matrix} \text{AM}(1,1) & \text{AM}(1,2) & \text{AM}(1,3) \\ \text{AM}(2,1) & \text{AM}(2,2) & \text{AM}(2,3) \\ \text{AM}(3,1) & \text{AM}(3,2) & \text{AM}(3,3) \end{matrix} = \begin{matrix} i.I & i.J & i.K \\ j.I & j.J & j.K \\ k.I & k.J & k.K \end{matrix}$$

The attitude matrix also furnishes information needed to do "pre-orientation". This means choosing whether to compute the two passes of the true perspective with the object Z axis first mapped along the view plane z axis, and then the intermediate image $Y'$ axis along the view plane y axis, or whether to map the object Y axis along the view plane z axis, and then the intermediate image $Z'$ axis along the view plane y axis. The idea is to ensure that pixels don't get telescoped together into an information losing melange.

The above dissertation provides the necessary background or setting for the invention which is described hereinafter.

It may be discerned from above that in two-pass mapping of a pixelized plane object, located in some general attitude at some general 3-space point, into a pixelized view plane image, as seen in true perspective, pixel-to-pixel metric factors are used, which have to be continually recalculated. Ostensibly, this involves much arithmetic, including long divisions. The actual relationship between object pixel images on the view plane and view plane pixels is, as expressed above, in the general form:

$$XV = (A^*XO + B)/(XO + C)$$

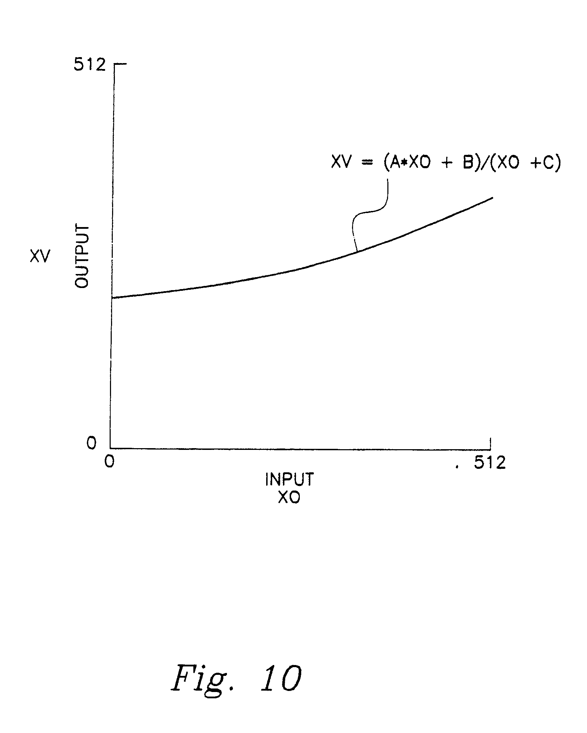

A graph for this general equation is shown in Fig. 10. This graph represents the mapping of pixels from one line of a 512 x 512 pixel frame in one plane to a corresponding line in another 512 x 512 pixel frame which may or may not be in a different plane.

At a given value of XO and XV, the change in XV per unit change in XO is given by:

$$DXV = XV(XO + 1)-XV(XO) = (A^*C - B)/(XO + C)^*(XO + C + 1).$$

The size factor DXO/DXV is the reciprocal thereof:

$$SF + DXO/DXV = X0^{**}2 + (1 + 2^*C)^*XO + C^*(1 + C))/(A^*C-B)$$

The value of the size factor SF is updated every time an object plane pixel is "consumed" (i.e. every time XO is incremented by 1.0) and every time a view plane is "generated" (i.e. every time XV is incremented by 1.0). The update is accomplished by the following double summation:

$$DSF = DSF + DDSF$$
$$SF = SF + DSF,$$

where DDSF $= 2/(A^*C-B)$.

All that needs to be done is to calculate initial values of SF, DSF and DDSF at the beginning of each row or column of the pixel remapping. The double summation then updates SF along the whole row or column, with the SF update being deployed every time an object pixel is used up and every time a view plane pixel is generated.

By way of explanation, the geometric basis for the size factor SF relates to the operation wherein, on average, every time an output pixel is completed, it means that XV has incremented by 1.0. The change in XO after completion of another output pixel can than be expressed as:

$$LO = XO \text{ for } XV + 1, \text{ minus } XO \text{ for } XV$$
$$= (A^*C - B)/((XV - A)^*(XV - A + 1)$$

This is the ratio of the length of an object pixel to the length of its image on the view plane. That is, it is the size factor SF.

The geometric basis for the size factor SF also relates to the length of the image of the object plane pixel on the view plane; this is the image of the one-pixel object plane segment which runs from XO to XO + 1:

$$LV = XV \text{ for } XO + 1, \text{ minus } XV \text{ for } XO$$
$$= (A^*XO + A + B)/(XO + 1 + C) - (A^*XO + B)/(XO + C)$$
$$= (A^*C - B)/((XO + C)^*(XO + C + 1)$$

This is the ratio of the length of the image of the object plane input pixel to the actual length of the object plane input pixel. That is, it is the inverse of the size factor SF.

The above algorithms are used to generate continuously variable values of the size factor SF to provide true perspective warp.

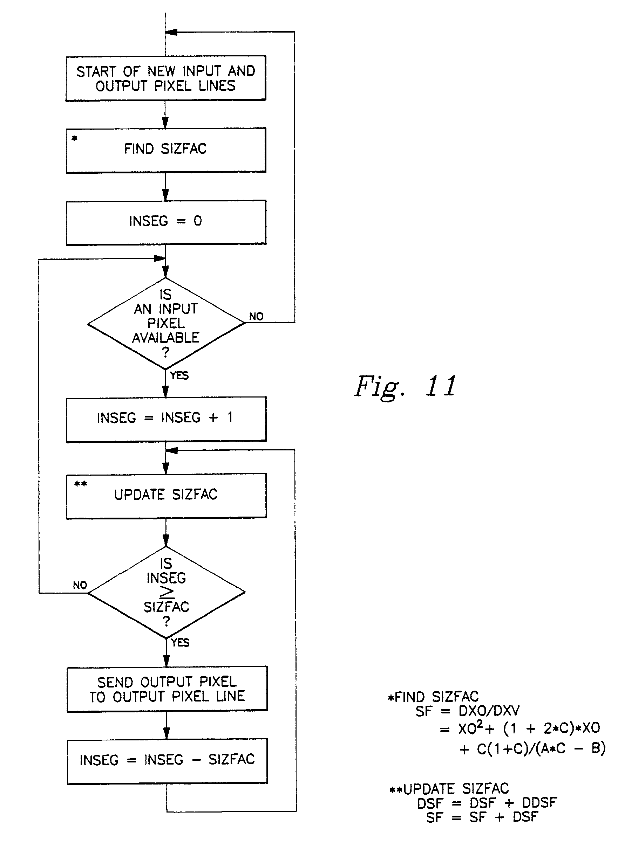

A flowchart for the method is shown in Fig. 11. The size factor (SIZFAC or SF) is the number of input pixels required to form one output pixel. If magnification is involved the size factor is less than one and if reduction is involved the size factor is greater than one.

The variable INSEG relates to the supply of input pixels and is used as a comparator, or has a comparator function, in relation to the size factor SIZFAC. In the case of reduction, more than one input pixel is required to generate an output pixel (i.e. SIZFAC > 1) and INSEG functions to successively sum the input pixels one at a time and be compared to SIZFAC until INSEG becomes larger than SIZFAC at which time an output pixel is generated.

In the case of magnification, only a portion of one input pixel is required to generate an output pixel (i.e. SIZFAC < 1). INSEG, which initially represents the first input pixel of an input pixel line, functions to cause an output pixel to be generated whenever it is larger than SIZFAC and to have the fractional representation (SIZFAC) subtracted therefrom after which SIZFAC is again updated and INSEG is again compared to SIZFAC. Thus, INSEG is cyclically compared to SIZFAC and, when it becomes smaller than SIZFAC, another input pixel is fetched and the process continues.

The finding and updating of SIZFAC referred to in the flowchart is done as explained hereinabove.

As indicated above, there are two parts to the mapping process which are (1) the positional mapping which transforms pixels on a fractional basis from one pixel line to another pixel line and (2) pixel strength mapping which distributes the intensities of the pixels of the first pixel line to the pixels of the second pixel line on a pro rated basis.

7

The flowchart of Fig. 11 only relates to the positional mapping and, in fact, there is no disclosure herein relating to pixel strength mapping. The reason is that the pixel strength mapping is routinely determined by the dictates of the positional mapping and complexities of description are avoided by not including a discussion of the arithmetic associated therewith. It will be understood, however, that as a practical matter pixel strength mapping must be necessarily included in practicing the method of the invention herein because it is an integral and essential part of the mapping process.

In the example herein relating to the billboard 5, the mapping process applicable thereto is illustrated in Fig. 2. Fig. 2 shows two-pass mapping involving mapping from an input data frame 10 to an intermediate data frame 20 and mapping from the intermediate frame 20 to a display data frame 30.

The invention herein is for broadly mapping from one data frame to another data frame and thus, in a sense, one embodiment of the invention is for the mapping from frame 10 to frame 20 and a separate or independent embodiment is for the mapping from frame 20 to frame 30. A convention in the claims hereof is to refer generally to input and output frames. Thus in Fig. 2 the first pass mapping would be from an input frame 10 to an output frame 20 and the second pass mapping would be from an input frame 20 to an output frame 30.

A prerequisite for the practice of the invention is that the input and output frames must be logically aligned so that the mapping is directly from a row or column in the input frame to either a row or column# as desired, in the output frame.

In the example of Fig. 2 the frames 10, 20 and 30 may each have a 512 x 512 pixel arrangement such that 512 pixel columns XO of frame 10 will be mapped to 512 pixel columns $(XV)''$ of frame 20 and 512 pixel rows $(XO)''$ of frame 20 will be mapped to 512 pixel rows $(XV)'$ of frame 30.

The general equation

$$XV = (A^*XO + B)/(XO + C)$$

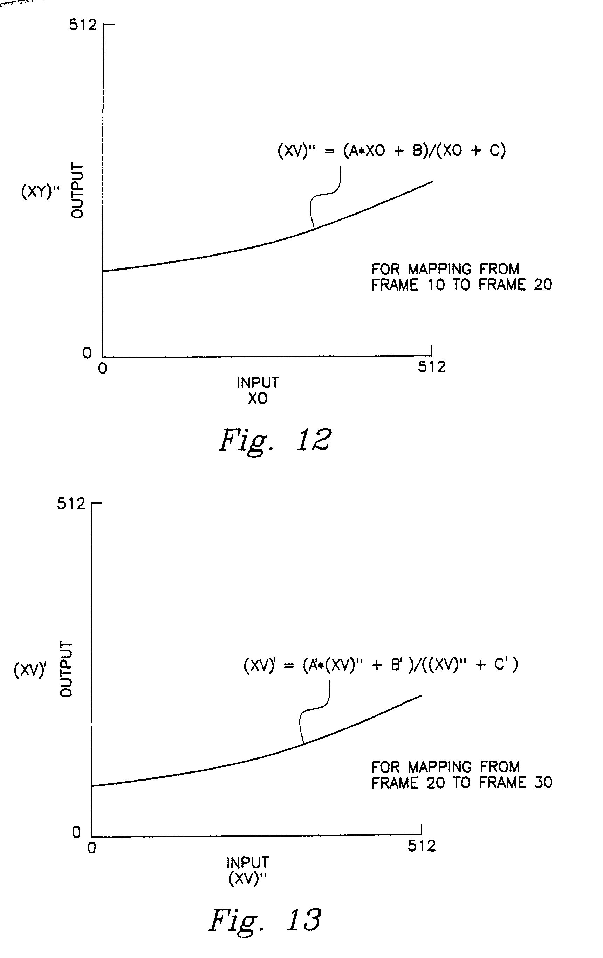

referred to above applies to the relationship between columns XO and $(XV)''$ of frames 10 and 20 and the relationship between rows $(XO)''$ and $(XV)'$ of frames 20 and 30. Characteristic curves for these relationships are shown in Figs. 12 and 13. The "curve" would be a straight line for a linear mapping but is a curved line for perspective mapping.

The primes and double primes for reference characters in Figs. 2, 12 and 13 are used in connection with the intermediate and display frames 20 and 30, respectively.

Referring further to Fig. 2, a program in accordance with prior art principles would be utilized to establish the four corners $A'$, $B'$, $C'$ and $D'$ of display frame 30 to define a bordered space into which the data of the source frame 10 is to be mapped.

The perspective mapping in accordance with the invention is described hereinabove and specifically in the flowchart of Fig. 11. The flowchart defines the mapping between two pixel lines in respective input and output frames such as, in Fig. 2, between pixel columns XO and $(XV)''$ and between pixel rows $(XO)''$ and $(XV)'$. The initially rectangular source frame 10 assumes the shape $A''$, $B''$, $C''$, $D''$ in intermediate frame 20 and the final shape $A'$, $B'$, $C'$, $D'$ in the display frame 30.

The arrows 40 to 47 in Fig. 2 designate the lines or line segments for the mapping process. By way of example, the line between 40 and 41 is to be mapped into the line between arrows 42 and 43. Likewise the line between arrows 44 and 45 is to be mapped into the line between arrows 46 and 47.

## Claims

1. A method for the perspective position mapping of input pixels from an input pixel line in an input image frame to output pixels in an output pixel line in an output image frame, **characterized in that** said lines have the relationship

$$XV = (A^*XO + B)/(XO + C)$$

with XO being the distance along said input pixel line and XV being the distance along said output pixel line and with A, B and C being constants for said relationship, comprising the steps of:

(a) determining the corresponding starting and stopping points for said line,

(b) finding the size factor SIZFAC at the origin of said lines which represents the number of said input pixels required to make one of said output pixels at said origin,

(c) determining if an input pixel is available and if not proceeding to step (h),

(d) providing an input pixel counter INSEG and setting it equal to one input pixel,

(e) updating said SIZFAC,

(f) determining if INSEG is equal to or greater than said SIZFAC and if not proceeding to step (c),

(g) generating an output pixel, subtracting said SIZFAC from said INSEG and returning to step (e),

(h) end of method.

2. A method according to claim 1, **characterized in that** said SIZFAC equals DXO/DXV.

3. A method according to claim 2, **characterized in that** said DXO/DXV equals $X0^{**}2 + (1 + 2^*C)^*XO + C - (1 + C)/(A^*C-B)$.

4. A method according to claim 1, 2 or 3, **characterized in that** in said step (e) said SIZFAC is SF and said SF updated equals SF + DSF, said DSF being DSF + DDSF.

FIG. 1

EP 0 397 071 A2

Fig. 2

*Fig. 3*

Fig. 4

OBJECT
PIXEL
GRID

VEIWPLANE
PIXEL
GRID

Fig. 5

Fig. 6

*Fig. 7*

*Fig. 8*

*Fig. 9*

$$XV = (A*XO + B)/(XO +C)$$

*Fig. 10*

```
┌─────────────────────────┐
│  START OF NEW INPUT AND  │
│   OUTPUT PIXEL LINES     │
└─────────────────────────┘
             │
             ▼
┌─────────────────────────┐
│ *     FIND SIZFAC        │
└─────────────────────────┘
             │
             ▼
┌─────────────────────────┐
│      INSEG = 0           │
└─────────────────────────┘
             │
             ▼
         ╱╲
        ╱  ╲
       ╱ IS ╲
      ╱AN INPUT╲    NO
      ╲ PIXEL  ╱────────
      ╲AVAILABLE╱
       ╲  ?  ╱
        ╲  ╱
         ╲╱
          │ YES
          ▼
┌─────────────────────────┐
│    INSEG = INSEG + 1     │
└─────────────────────────┘
          │
          ▼
┌─────────────────────────┐
│ **   UPDATE SIZFAC       │
└─────────────────────────┘
          │
          ▼
        ╱╲
       ╱  ╲
  NO  ╱ IS ╲
─────╱INSEG ╲
     ╲  ≥   ╱
     ╲SIZFAC╱
      ╲  ? ╱
       ╲  ╱
        ╲╱
         │ YES
         ▼
┌─────────────────────────┐
│   SEND OUTPUT PIXEL      │
│  TO OUTPUT PIXEL LINE    │
└─────────────────────────┘
         │
         ▼
┌─────────────────────────┐
│  INSEG = INSEG - SIZFAC  │
└─────────────────────────┘
```

*Fig. 11*

*FIND SIZFAC
$$SF = DXO/DXV$$
$$= XO^2 + (1 + 2*C)*XO$$
$$+ C(1+C)/(A*C - B)$$

**UPDATE SIZFAC
$$DSF = DSF + DDSF$$
$$SF = SF + DSF$$

$$(XV)'' = (A*XO + B)/(XO + C)$$

FOR MAPPING FROM
FRAME 10 TO FRAME 20

INPUT
XO

*Fig. 12*

$$(XV)' = (A'*(XV)'' + B')/((XV)'' + C')$$

FOR MAPPING FROM
FRAME 20 TO FRAME 30

INPUT
(XV)''

*Fig. 13*